(19) **Europäisches Patentamt / European Patent Office / Office européen des brevets**

(11) **EP 2 296 487 B1**

(12) **EUROPEAN PATENT SPECIFICATION**

(45) Date of publication and mention
of the grant of the patent:
**28.12.2011 Bulletin 2011/52**

(51) Int Cl.:
*A23J 1/00* (2006.01)      *A23J 1/12* (2006.01)
*A23J 3/34* (2006.01)

(21) Application number: **09757484.2**

(22) Date of filing: **29.05.2009**

(86) International application number:
**PCT/EP2009/056642**

(87) International publication number:
**WO 2009/147103 (10.12.2009 Gazette 2009/50)**

(54) **METHOD FOR PRODUCING A WHEAT PROTEIN HYDROLYSATE**

VERFAHREN ZUR HERSTELLUNG EINES WEIZENPROTEINHYDROLYSATS

PROCEDE DE FABRICATION D'UN HYDROLYSAT DE PROTEINE DE BLE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **03.06.2008 EP 08157452**

(43) Date of publication of application:
**23.03.2011 Bulletin 2011/12**

(73) Proprietor: **Novozymes A/S
2880 Bagsvaerd (DK)**

(72) Inventors:
• **LYNGLEV, Gitte, Budolfsen
DK-2000 Frederiksberg (DK)**
• **NIELSEN, Per Munk
DK-3400 Hilleroed (DK)**

(56) References cited:
**WO-A1-94/25580      WO-A1-98/27827
WO-A1-99/05918      WO-A2-2005/123911
US-A- 5 945 299**

EP 2 296 487 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**REFERENCE TO A SEQUENCE LISTING**

This application contains a sequence listing in computer readable form. The computer readable form is incorporated herein by reference.

**TECHNICAL FIELD**

The present invention relates to a method for producing a wheat protein hydrolysate using a microbial endopeptidase.

**BACKGROUND OF THE INVENTION**

Wheat protein hydrolysates have been traditionally used as food additives and are now being used in cooking worldwide, e.g. for flavour formation. Wheat protein hydrolysates are also used for protein fortification, e.g. in sports drinks, as wheat protein provides higher levels of glutamine than, e.g., soy protein, and in other dietary drinks, dry blended beverages, nutritional bars, etc. Wheat protein hydrolysates may be manufactured using proteolytic enzymes to hydrolyse the wheat protein. In industrial manufacturing of wheat protein hydrolysates, high solubility or suspendability of the hydrolysed protein is important both from a processing point of view, from a pure yield/economical point of view and because of mouthfeel and sensory attributes. It was therefore an object for the present inventors to identify proteolytic enzymes which are useful for preparing wheat protein hydrolysates having a high solubility.

Endopeptidases found to be applicable according to the present invention have been previously described. E.g., the endopeptidase derived from *Nocardiopsis* sp. NRRL 18262 is disclosed in WO88/03947 (here the strain is referred to as *Nocardiopsis* sp. strain 10R) and WO01/58276. Other related endopeptidases which are useful according to the invention are disclosed in WO88/03947, WO04/111220 WO04/111222 WO04/11122 WO05/123911, and WO04/072279.

WO 98/27827 discloses a process for obtaining enzymatically hydrolysed proteinaceous material, such as wheat protein, using an exopeptidase, in combination with one or more suitable endopeptidases.

**SUMMARY OF THE INVENTION**

The present inventors have identified endopeptidases which are found to be applicable in making wheat protein hydrolysates having a high solubility and giving uniform suspensions. Such endopeptidases are more efficient than other endopeptidases used in the art when compared to an equal amount of enzyme protein, which results in better product economy for the producers of wheat protein hydrolysates. Consequently, the present invention relates to a method for producing a wheat protein hydrolysate, comprising: a) adding to a composition comprising wheat protein an endopeptidase having at least 50% identity to SEQ ID NO: 1; and b) incubating so as to hydrolyse the wheat protein.

**DETAILED DISCLOSURE OF THE INVENTION**

Endopeptidase

The term endopeptidase as used herein is an enzyme that hydrolyses internal peptide bonds (has endopeptidase activity).

There are no limitations on the origin of the endopeptidase for use according to the invention. Thus, the term endopeptidase includes not only natural or wild-type endopeptidases, but also any mutants, variants, fragments etc. thereof exhibiting endopeptidase activity, as well as synthetic endopeptidases, such as shuffled endopeptidases. Genetically engineered endopeptidase variants can be prepared as is generally known in the art, e.g. by site-directed mutagenesis, by PCR (using a PCR fragment containing the desired mutation as one of the primers in the PCR reactions), or by random mutagenesis. Examples of endopeptidase variants, as used in the present context, are endopeptidases in which one or more amino acids have been deleted, inserted or substituted with other amino acids.

Examples of endopeptidases for use according to the invention are

(i) the endopeptidase derived from *Nocardiopsis* sp. NRRL 18262, disclosed in WO01/58276, the sequence of which is shown as SEQ ID NO: 1 of the present document;
(ii) endopeptidases having at least 50, 55, 60, 65, 70, 75, 80, 85, 90, or at least 95% amino acid identity to the endopeptidase of (i);

(iii) mutants, variants or fragments of the endopeptidases of (i) or (ii) exhibiting endopeptidase activity.

For purposes of the present invention, the alignment of two amino acid sequences can be determined by using the Needle program from the EMBOSS package (http://emboss.org) version 2.8.0. The Needle program implements the global alignment algorithm described in Needleman, S. B. and Wunsch, C. D. (1970) J. Mol. Biol. 48, 443-453. The substitution matrix used is BLOSUM62, gap opening penalty is 10, and gap extension penalty is 0.5.

The degree of identity between two amino acid sequences is calculated as the number of exact matches in an alignment of the two sequences, divided by the length of the shortest of the two sequences. The result is expressed in percent identity.

An exact match occurs when the two sequences have identical amino acid residues in the same positions of the overlap. The length of a sequence is the number of amino acid residues in the sequence (e.g. the length of SEQ ID NO: 1 is 188).

As examples of bacterial endopeptidases applicable for use according to the invention can also be mentioned the endopeptidase from *Nocardiopsis alba* (previously *Nocardiopsis dassonvillei*) NRRL 18133 disclosed in WO88/03947, the endopeptidases from *Nocardiopsis dassonvillei* subsp. *dassonvillei* DSM 43235, *Nocardiopsis alba* DSM 15647, *Nocardiopsis* sp. DSM 16424 and the synthetic Protease 22, all four disclosed in WO04/111220 the endopeptidase from *Nocardiopsis prasina* DSM 15648 disclosed in WO04/111222, the endopeptidase from *Nocardiopsis prasina* DSM 15649 disclosed in WO04/111223, the endopeptidases from *Nocardiopsis prasina* (previously *Nocardiopsis alba)* DSM 14010, *Nocardiopsis alkaliphila* DSM 44657 and *Nocardiopsis lucentensis* DSM 44048, all three disclosed in WO05/123911, the endopeptidases from *Brachysporiella gayana* CGMCC 0865, *Metarhizium anisopliae, Gliocladium* sp. CBS 114001, *Periconia* sp. CBS 114002, *Periconia* sp. CBS 114000 and *Curvularia lunata* CBS 114003, all 6 disclosed in WO04/072279, and mutants, variants or fragments of any of these exhibiting endopeptidase activity.

An endopeptidase for use according to the invention is a microbial endopeptidase, preferably a bacterial endopeptidase, the term bacterial indicating that the endopeptidase is derived from, or originates from, a bacteria, or is an analogue, a fragment, a variant, a mutant, or a synthetic endopeptidase derived from a bacteria. It may be produced or expressed in the original wild-type bacterial strain, in another microbial strain, or in a plant; i.e. the term covers the expression of wild-type, naturally occurring endopeptidases, as well as expression in any host of recombinant, genetically engineered or synthetic endopeptidases.

In the process of the invention, the endopeptidase may be purified. The term "purified" as used herein covers enzyme protein preparations where the preparation has been enriched for the enzyme protein in question. Such enrichment could for instance be: the removal of the cells of the organism from which an extracellular enzyme protein was produced, the removal of non-protein material by a protein specific precipitation or the use of a chromatographic procedure where the enzyme protein in question is selectively adsorbed and eluted from a chromatographic matrix. The endopeptidase may have been purified to an extent so that only minor amounts of other proteins are present. The expression "other proteins" relate in particular to other enzymes. An endopeptidase to be used in the method of the invention may be "substantially pure", i.e. substantially free from other components from the organism in which it was produced, which may either be a naturally occurring microorganism or a genetically modified host microorganism for recombinant production of the endopeptidase.

However, for the uses according to the invention, the endopeptidase need not be that pure. It may, e.g., include other enzymes, even other endopeptidases.

In a preferred aspect, the endopeptidase to be used in the method of the invention has been purified to contain at least 20%, preferably at least 30%, at least 40% or at least 50%, (w/w) of the endopeptidase in question out of total protein. The amount of endopeptidase may be calculated from an activity measurement of the preparation divided by the specific activity of the endopeptidase (activity/mg EP), or it may be quantified by SDS-PAGE or any other method known in the art. The amount of total protein may, e.g., be measured by amino acid analysis.

Use of the endopeptidase according to the present invention may be combined with use of other enzymes, e.g. other proteases. In one preferred embodiment, an endopeptidase, e.g. the one derived from *Nocardiopsis* sp. NRRL 18262, is combined with an exopeptidase, or a protease preparation having exopeptidase activity, e.g. a protease preparation derived from *Aspergillus oryzae*, as disclosed in WO94/25580, such as Flavourzyme® (Novozymes A/S, Denmark).

In one particular embodiment, the endopeptidase for use according to the invention has a pH-activity optimum close to neutral, when determined by hydrolysis of casein and subsequent reaction of TCA-soluble peptides with o-phtaldialdehyde and 2-mercaptoethanol followed by measurement of the absorbance of the resulting complex at 340 nm.

The term pH-activity optimum close to neutral may mean that the endopeptidase has a pH optimum in the interval of pH 5.5-11, preferably pH 7-11, more preferably pH 8-11, even more preferably pH 9.5-10.5, and most preferably at around pH 10.

In another particular embodiment, the endopeptidase for use according to the invention is thermostable.

The term thermostable may mean that the temperature optimum at pH 9 is at least 50°C or at least 55°C, preferably at least 60°C, more preferably at least 65°C, and even more preferably at least 67°C, such as about 70°C, when determined by hydrolysis of casein as described above.

Wheat protein hydrolysate

The wheat protein to be used in the method of the invention is to be understood as proteins which may be obtainable from wheat, such as proteins isolated from wheat.

The wheat protein may comprise intact wheat proteins or it may comprise partially hydrolyzed wheat proteins.

A variety of wheat protein materials may be used in the method of the invention. In general, the wheat protein material to be used may be derived from wheat in accordance with methods known in the art. The wheat protein material may in one embodiment be wheat flour having a protein content of 10-15% of total dry matter, e.g. a protein content of about 13% of total dry matter. In another embodiment, the wheat protein material may have been further purified, e.g. by washing wheat flour dough with water until the starch dissolves, leaving insoluble gluten as a gummy mass, which is subject to further processing. The wheat protein material may, e.g., be wheat protein concentrate or wheat protein isolate, also known as wheat gluten concentrate or wheat gluten isolate. It may have a protein content of more than 50°/°, such as more than 60%, 70%, 80% or 90%.

The wheat protein material may have been pre-treated, such as by heating or by chemical treatment with, e.g., acid, base or chlorine.

In the method of the invention, the wheat protein material is typically mixed or dispersed in water to form a slurry comprising about 1% to about 25% protein by weight. In one embodiment, the slurry may comprise about 1% to about 5% protein by weight. In another embodiment, the slurry may comprise about 6% to about 10% protein by weight. In a further embodiment, the slurry may comprise about 11% to about 15% protein by weight. In still another embodiment, the slurry may comprise about 16% to about 20% protein by weight. In still another embodiment, the slurry may comprise about 21% to about 25% protein by weight. In a preferred embodiment, the slurry may comprise about 5% to about 25% protein by weight.

After the protein material is dispersed in water, the pH and/or the temperature of the protein slurry may be adjusted so as to optimize the hydrolysis reaction, and in particular, to ensure that the endopeptidase used in the hydrolysis reaction functions near its optimal activity level. The pH of the protein slurry may be adjusted and monitored according to methods generally known in the art. The pH of the protein slurry may be adjusted at from about 5 to about 10. In one embodiment, the pH of the protein slurry may be adjusted at from about 6 to about 9. In a preferred embodiment, the pH of the protein slurry may be adjusted at from about 6.5 to about 8. The pH of the protein slurry may be maintained at such level during the hydrolysis reaction or it may be allowed to decrease as the hydrolysis reaction proceeds. The temperature of the protein slurry is preferably adjusted and maintained at from about 45°C to about 70°C during the hydrolysis reaction in accordance with methods known in the art. In a preferred embodiment, the temperature of the protein slurry may be adjusted and maintained at from about 63°C to about 70°C during the hydrolysis reaction. In general, temperatures above this range may inactivate the endopeptidase, while temperatures below or above this range tend to slow the activity of the endopeptidase.

The hydrolysis reaction is generally initiated by adding the endopeptidase to the slurry of protein material. Alternatively, the enzyme may be dispersed in water and the protein material added slowly while stirring. The latter method may be advantageous when preparing a concentrated protein slurry to avoid that the viscosity becomes too high.

Preferably, the amount of endopeptidase used in the method of the invention is from about 0.005 to about 100 AU (as defined below) per kg wheat protein, preferably from about 0.01 to about 50 AU per kg wheat protein, more preferably from about 0.02 to about 30 AU per kg wheat protein.

One Anson Unit (AU) is defined as the amount of enzyme which under standard conditions (i.e. 25°C, pH 7.5 and 10 min. reaction time) digests haemoglobin at an initial rate such that there is liberated per minute an amount of TCA soluble product which gives the same colour with phenol reagent as one milliequivalent of tyrosine. When determining the AU activity, the concentration of haemoglobin may preferably be around 1.3%.

The amount of endopeptidase added to the protein material can and will vary depending upon the source of the protein material, the desired degree of hydrolysis, and the duration of the hydrolysis reaction. The amount of endopeptidase may range from about 1 mg of enzyme protein to about 5000 mg of enzyme protein per kilogram of wheat protein. In a preferred embodiment, the amount may range from 1 mg of enzyme protein to about 1000 mg of enzyme protein per kilogram of wheat protein. In another preferred embodiment, the amount may range from about 5 mg of enzyme protein to about 500 mg of enzyme protein per kilogram of wheat protein.

As will be appreciated by the skilled person, the duration of the hydrolysis reaction can and will vary. Generally speaking, the duration of the hydrolysis reaction may range from a few minutes to many hours, such as, from about 30 minutes to about 48 hours.

Preferably, the treatment with endopeptidase results in a wheat protein hydrolysate having a degree of hydrolysis (DH) from about 0.1% to about 10%, more preferably from about 0.1 % to about 6% or from about 0.5% to about 5%, even more preferably from about 0.5% to about 3%.

The degree of hydrolysis (DH) expresses the extent of the protein hydrolysis obtained by the method. In the context of the invention, the degree of hydrolysis (DH) is defined as follows:

$$DH = (Number\ of\ peptide\ bonds\ cleaved\ /\ Total\ number\ of\ peptide\ bonds) \times 100\ \%$$

The skilled person will know how to measure the DH. It may, e.g., be done using a method as described in Adler-Nissen, J., 1986, Enzymatic Hydrolysis of Food Proteins, Chapter 5, pp. 122-124.

After completion of step b), the endopeptidase may be inactivated. Such inactivation may be performed by any method known in the art, e.g. by heating to at least 75°C, such as to at least 80°C or at least 85°C.

In one embodiment, the method of the invention further comprises treatment of the wheat protein composition with one or more additional enzymes having protease activity. Such additional proteolytic enzyme may be one or more endopeptidases and/or one or more exopeptidases. The one or more exopeptidases may be, e.g., one or more aminopeptidases and/or one or more carboxypeptidases.

Incubation with the endopeptidase having at least 50% identity to SEQ ID NO: 1 and incubation with the one or more additional enzymes having protease activity may not be performed simultaneously. I.e., if the proteolytic enzymes do not perform at the same pH and/or the same temperature, the wheat protein composition may be incubated with one (or more) proteolytic enzyme(s) at first, followed by optional adjustment of pH and/or temperature and subsequent incubation with the other proteolytic enzyme(s).

When using one or more additional enzymes having protease activity, the resulting wheat protein hydrolysate may have a higher degree of hydrolysis (DH) than indicated above. It may, e.g., have a degree of hydrolysis of about 5-25%.

In another embodiment of the method of the invention, the wheat protein material may be subjected to treatment with other enzymes in addition to treatment with enzyme(s) having protease activity. Such additional enzyme treatment may be performed before, at the same time or after the protease treatment, and the additional enzyme may be one or more from the group comprising amylase, phytase, cellulase, hemicellulase, phospholipase, lipase and xylanase. Such other enzymes may be used to provide properties to the wheat protein hydrolysate which are not dictated by the protein and/or peptides in the hydrolysate.

A wheat protein hydrolysate obtained by the method of the invention may be used in a food product, e.g. in a beverage. A food product according to the present invention may be any product intended for human consumption. Non-limiting examples of such food products include nutrition bars, dry blended beverages, sports drinks and energy drinks. A wheat protein hydrolysate obtained by the method of the invention may also be used in clinical nutrition, e.g. at hospitals.

## EXAMPLE 1

*Comparison of hydrolysis of wheat protein with endopeptidase from Nocardiopsis sp. NRRL 18262 having the sequence shown in SEQ ID NO: 1 and Alcalase® 2.4L (Novozymes A/S, Denmark)*

Hydrolysis with protease:

*Protein preparation:*

Vital wheat gluten from Tate & Lyle, 75% protein: 15 g + 285 g water.

The wheat protein product was suspended to a 5% w/v suspension with demineralised water (Milli Q). The protein was added slowly to the Milli Q water (room temperature) on a magnetic stirrer. The rpm was adjusted to avoid foaming. The protein solution was dispersed for 15-30 min.

*pH adjustment:*

pH was adjusted to 8.0 with 4 N NaOH and was maintained during the hydrolysis reaction.

*Enzyme dosage:*

The *Nocardiopsis* protease was dosed at 10, 50, 100 and 300 mg enzyme protein (ep)/kg protein and Alcalase 2.4L was dosed at 10, 50 and 100 mg enzyme protein (ep)/kg protein. Enzyme was stored on ice during handling.

*Enzyme treatment:*

Temperature: 60°C +/- 1°C
Time: 120 min.

Enzyme was added to the wheat protein on a magnetic stirrer in a water bath. Enzyme was added when the temperature in the protein solution had reached 60°C.

*Heat inactivation / storage:*

Immediately after enzyme treatment, the samples were heat treated 15 min. at 85°C in a shaking water bath. The samples were cooled on ice and refrigerated at 4°C over night.

After incubation at 4°C over night solubility and degree of hydrolysis were evaluated.

Solubility:

Solubility was measured using a Leco FP 528 Protein/Nitrogen analyzer measuring protein and nitrogen content by a combustion method. The Nitrogen content was measured in the soluble fraction and solubility was calculated as the Nitrogen content in percentage of total dry matter content.

Degree of hydrolysis:

Degree of hydrolysis of the suspension was measured by pH stat as described in Adler-Nissen, J., 1986, Enzymatic Hydrolysis of Food Proteins, Chapter 5, pp. 122-124.

Results:

Degree of hydrolysis:

| Protease konc (mg/kg wheat protein material) | Alcalase | *Nocardiopsis* endopeptidase |
|---|---|---|
| 0 (Reference) | 0.39 | |
| 10 | 0.76 | 0.46 |
| 50 | 0.81 | 0.99 |
| 100 | 1.40 | 1.63 |
| 300 | - | 4.90 |

Solubility pH 6.5:

| Protease konc (mg/kg wheat protein material) | Alcalase | *Nocardiopsis* endopeptidase |
|---|---|---|
| 0 (Reference) | 5.8 | |
| 10 | 8.9 | 6.6 |
| 50 | 11.4 | 21.9 |
| 100 | 17.2 | 36.4 |
| 300 | - | 61.9 |

Solubility pH 4.0:

| Protease konc (mg/kg wheat protein material) | Alcalase | *Nocardiopsis* endopeptidase |
|---|---|---|
| 0 (Reference) | 7.0 | |
| 10 | 12.9 | 14.3 |
| 50 | 15.3 | 29.9 |
| 100 | 20.4 | 29,4 |
| 300 | - | 54.4 |

Conclusion:

It is seen that at a given concentration of protease gave similar degree of hydrolysis with Alcalase and *Nocardiopsis* endopeptidase. However, solubility is seen to be generally higher with *Nocardiopsis* endopeptidase than with Alcalase both at a given protease concentration and at a given degree of hydrolysis, and both at pH 6.5 and 4.0 (yet note 10 mg ep/kg is an exception at pH 6.0). In addition, visual inspection revealed a uniform suspension when using *Nocardiopsis* endopeptidase as the catalyst while Alcalase under the given conditions was non-uniform (lump formation).

## Claims

1. A method for producing a wheat protein hydrolysate, comprising:

   a) adding to a composition comprising wheat protein an endopeptidase having at least 50% identity to SEQ ID NO: 1; and
   b) incubating so as to hydrolyse the wheat protein.

2. The method of claim 1 wherein the endopeptidase has at least 60% identity to SEQ ID NO: 1.

3. The method of claim 1 wherein the endopeptidase has at least 80% identity to SEQ ID NO: 1.

4. The method of any of the preceding claims, wherein the pH optimum of the endopeptidase is between pH 9.5 and pH 10.5.

5. The method of any of the preceding claims, wherein the temperature optimum of the endopeptidase at pH 9 is at least 60°C.

6. The method of any of the preceding claims, wherein the endopeptidase is from *Nocardiopsis.*

7. The method of any of the preceding claims, wherein the endopeptidase is added at a concentration of between 1 and 1000 mg enzyme protein per kg wheat protein.

8. The method of any of the preceding claims, wherein the endopeptidase is added at an activity of between 0.01 and 50 AU per kg wheat protein.

9. The method of any of the preceding claims, wherein the composition comprises from about 5% to about 25% wheat protein.

10. The method of any of the preceding claims, which further comprises treatment of the wheat protein composition with one or more additional enzymes having protease activity.

11. The method of any of the preceding claims, which further comprises treatment of the wheat protein composition with one or more exopeptidases.

12. The method of any of the preceding claims, which further comprises treatment of the wheat protein composition with one or more enzymes from the group comprising amylase, phytase, cellulase, hemicellulase, phospholipase, lipase and xylanase.

13. A wheat protein hydrolysate produced by the method of any of the preceding claims.

14. Use of a wheat protein hydrolysate produced by the method of any of claims 1-12 in a food product.


**Patentansprüche**

1. Verfahren zum Herstellen eines Weizenproteinhydrolysats, umfassend:

   (a) Hinzufügen einer Endopeptidase mit mindestens 50% Identität zu SEQ ID NO: 1 zu einer Weizenprotein umfassenden Zusammensetzung; und
   (b) Inkubieren, um das Weizenprotein zu hydrolysieren.

2. Verfahren nach Anspruch 1, wobei die Endopeptidase mindestens 60% Identität zu SEQ ID NO: 1 aufweist.

3. Verfahren nach Anspruch 1, wobei die Endopeptidase mindestens 80% Identität zu SEQ ID NO: 1 aufweist.

4. Verfahren nach einem der vorhergehenden Ansprüche, wobei das pH-Optimum der Endopeptidase zwischen pH 9,5 und pH 10,5 liegt.

5. Verfahren nach einem beliebigen der vorhergehenden Ansprüche, wobei das Temperaturoptimum der Endopeptidase bei pH 9 mindestens 60 °C beträgt.

6. Verfahren nach einem beliebigen der vorhergehenden Ansprüche, wobei die Endopeptidase aus *Nocardiopsis* ist.

7. Verfahren nach einem beliebigen der vorhergehenden Ansprüche, wobei die Endopeptidase in einer Konzentration zwischen 1 und 1000 mg Enzymprotein pro kg Weizenprotein hinzugefügt wird.

8. Verfahren nach einem beliebigen der vorhergehenden Ansprüche, wobei die Endopeptidase in einer Aktivität zwischen 0,01 und 50 AU pro kg Weizenprotein hinzugefügt wird.

9. Verfahren nach einem beliebigen der vorhergehenden Ansprüche, wobei die Zusammensetzung von etwa 5% bis etwa 25% Weizenprotein umfasst.

10. Verfahren nach einem beliebigen der vorhergehenden Ansprüche, das des Weiteren die Behandlung der Weizenproteinzusammensetzung mit einem oder mehreren zusätzlichen Enzymen mit Proteaseaktivität umfasst.

11. Verfahren nach einem beliebigen der vorhergehenden Ansprüche, das des Weiteren die Behandlung der Weizenproteinzusammensetzung mit einer oder mehreren Exopeptidasen umfasst.

12. Verfahren nach einem beliebigen der vorhergehenden Ansprüche, das des Weiteren die Behandlung der Weizenproteinzusammensetzung mit einem oder mehreren Enzymen aus der Gruppe, umfassend Amylase, Phytase, Cellulase, Hemicellulase, Phospholipase, Lipase und Xylanase, umfasst.

13. Weizenproteinhydrolysat, hergestellt durch das Verfahren gemäß einem beliebigen der vorhergehenden Ansprüche.

14. Verwendung eines durch das Verfahren gemäß einem beliebigen der Ansprüche 1-12 hergestellten Weizenproteinhydrolysats in einem Lebensmittelprodukt.

## Revendications

1. Procédé pour produire un hydrolysat de protéines de blé, comprenant :

    a) l'ajout à une composition comprenant des protéines de blé, d'une endopeptidase ayant au moins 50% d'identité avec SEQ ID NO : 1 ; et
    b) l'incubation de manière à hydrolyser les protéines de blé.

2. Procédé selon la revendication 1, dans lequel l'endopeptidase a au moins 60% d'identité avec SEQ ID NO : 1.

3. Procédé selon la revendication 1, dans lequel l' endopeptidase a au moins 80% d'identité avec SEQ ID NO : 1.

4. Procédé selon l'une quelconque des revendications précédentes, dans lequel le pH optimal de l'endopeptidase est entre pH 9,5 et pH 10,5.

5. Procédé selon l'une quelconque des revendications précédentes, dans lequel la température optimale de l'endopeptidase à pH 9 est au moins 60°C.

6. Procédé selon l'une quelconque des revendications précédentes, dans lequel l'endopeptidase est issue de *Nocardiopsis.*

7. Procédé selon l'une quelconque des revendications précédentes, dans lequel l'endopeptidase est ajoutée à une concentration de 1 à 1000 mg de protéine enzymatique par kg de protéines de blé.

8. Procédé selon l'une quelconque des revendications précédentes, dans lequel l'endopeptidase est ajoutée à une activité de 0,01 à 50 UA par kg de protéines de blé.

9. Procédé selon l'une quelconque des revendications précédentes, dans lequel la composition comprend entre environ 5% et environ 25% de protéines de blé.

10. Procédé selon l'une quelconque des revendications précédentes, qui comprend en outre le traitement de la composition de protéines de blé avec une ou plusieurs enzymes additionnelles ayant une activité protéase.

11. Procédé selon l'une quelconque des revendications précédentes, qui comprend en outre le traitement de la composition de protéines de blé avec une ou plusieurs exopeptidases.

12. Procédé selon l'une quelconque des revendications précédentes, qui comprend en outre le traitement de la composition de protéines de blé avec une ou plusieurs enzymes du groupe comprenant une amylase, une phytase, une cellulase, une hémicellulase, une phospholipase, une lipase et une xylanase.

13. Hydrolysat de protéines de blé produit par le procédé selon l'une quelconque des revendications précédentes.

14. Utilisation d'un hydrolysat de protéines de blé produit par le procédé selon l'une quelconque des revendications 1 à 12 dans un produit alimentaire.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8803947 A
- WO 0158276 A
- WO 04111220 A
- WO 04111222 A
- WO 0411122 A

- WO 05123911 A
- WO 04072279 A
- WO 9827827 A
- WO 04111223 A
- WO 9425580 A

**Non-patent literature cited in the description**

- **NEEDLEMAN, S. B. ; WUNSCH, C. D.** *J. Mol. Biol.,* 1970, vol. 48, 443-453

- **ADLER-NISSEN, J.** Enzymatic Hydrolysis of Food Proteins. 1986, 122-124

SEQUENCE LISTING

<110> Novozymes A/S

<120> Method for producing a wheat protein hydrolysate

<130> 11465.204-WO

<160> 1

<170> PatentIn version 3.5

<210> 1
<211> 188
<212> PRT
<213> Nocardiopsis sp.

<400> 1

```
Ala Asp Ile Ile Gly Gly Leu Ala Tyr Thr Met Gly Gly Arg Cys Ser
1               5               10              15

Val Gly Phe Ala Ala Thr Asn Ala Ala Gly Gln Pro Gly Phe Val Thr
            20              25              30

Ala Gly His Cys Gly Arg Val Gly Thr Gln Val Thr Ile Gly Asn Gly
        35              40              45

Arg Gly Val Phe Glu Gln Ser Val Phe Pro Gly Asn Asp Ala Ala Phe
    50              55              60

Val Arg Gly Thr Ser Asn Phe Thr Leu Thr Asn Leu Val Ser Arg Tyr
65              70              75              80

Asn Thr Gly Gly Tyr Ala Thr Val Ala Gly His Asn Gln Ala Pro Ile
            85              90              95

Gly Ser Ser Val Cys Arg Ser Gly Ser Thr Thr Gly Trp His Cys Gly
        100             105             110

Thr Ile Gln Ala Arg Gly Gln Ser Val Ser Tyr Pro Glu Gly Thr Val
        115             120             125

Thr Asn Met Thr Arg Thr Thr Val Cys Ala Glu Pro Gly Asp Ser Gly
        130             135             140

Gly Ser Tyr Ile Ser Gly Thr Gln Ala Gln Gly Val Thr Ser Gly Gly
145             150             155             160

Ser Gly Asn Cys Arg Thr Gly Gly Thr Thr Phe Tyr Gln Glu Val Thr
            165             170             175

        Pro Met Val Asn Ser Trp Gly Val Arg Leu Arg Thr
                180             185
```